Europäisches Patentamt

European Patent Office

Office européen des brevets

(11) Veröffentlichungsnummer: **0 261 523 B1**

# EUROPÄISCHE PATENTSCHRIFT

(45) Veröffentlichungstag der Patentschrift: **28.08.91**

(21) Anmeldenummer: 87113310.4

(22) Anmeldetag: **11.09.87**

(51) Int. Cl.⁵: **B23P 15/00**, B23K 20/00, B29C 45/73

(54) **Verfahren zur Herstellung eines Spritzgiesswerkzeugs.**

(30) Priorität: **25.09.86 DE 3632640**

(43) Veröffentlichungstag der Anmeldung:
**30.03.88 Patentblatt 88/13**

(45) Bekanntmachung des Hinweises auf die
Patenterteilung:
**28.08.91 Patentblatt 91/35**

(84) Benannte Vertragsstaaten:
**AT DE ES FR GB IT NL**

(56) Entgegenhaltungen:
**DE-A- 2 734 346**

**PATENT ABSTRACTS OF JAPAN, Band 7, Nr. 102 (M-211)[1247], 30. April 1983, Seite 96 M 211; & JP-A-58 023 537 (MITSUBISHI JUKO-GYO K.K.) 12-02-1983**

(73) Patentinhaber: **Agfa-Gevaert AG**

**W-5090 Leverkusen 1(DE)**

(72) Erfinder: **Graczoll, Peter**
**Rheinsteinstrasse 1**
**W-8000 München 70(DE)**
Erfinder: **Gumplinger, Franz**
**Hausnummer 27**
**W-8303 Rottenburg(DE)**
Erfinder: **Peuke, Helmut**
**Hausnummer 35**
**W-8301 Hohentann(DE)**
Erfinder: **Riedel, Gerd, Dipl.-Ing.**
**Schwingensteiner Weg 4**
**W-8000 München 83(DE)**

EP 0 261 523 B1

## Beschreibung

Die Erfindung bezieht sich auf ein Verfahren zur Herstellung eines Spritzgießwerkzeuges, welches ein Temperierkanalsystem enthält und wobei die das Temperierkanalsystem enthaltenden Werkzeugeinsätze jeweils aus zwei oder mehr Platten zusammengesetzt sind.

Spritzgießwerkzeuge, beispielsweise für die serienmäßige Verarbeitung thermoplastischer Kunststoffe bestehen im allgemeinen nach Fig .1 aus einer (nicht gezeichneten) Spritzdüse sowie einen aus zwei Hälften (10, 11) bestehenden Werkzeugeinsatz, in dessen zwischen den zwei Hälften befindliche Kavität (15) mittels der Spritzdüse der flüssige Kunststoff unter hohem Druck eingespritzt wird und sich dort verteilt. Das Spritzgießwerkzeug enthält ein Temperierkanalsystem (12) in Form von Bohrungen, durch die ein Temperiermedium strömt und so eine möglichst rasche gleichmäßige Abkühlung des Formteils besorgt. Nach dem Erstarren der Formmasse öffnet sich das Werkzeug, das geformte Kunststoffteil wird ausgestoßen oder mittels eines Greifers abgenommen, anschließend wird das Werkzeug wieder geschlossen und der geschilderte Vorgang wiederholt sich.

Wie in dem Buch "Spritzgießwerkzeugbau in Beispielen" (Hanser Verlag, München 1975) auf den Seiten 21 bis 26 ausgeführt, treffen in den meisten praktischen Fällen zwei Forderungen zusammen, die in der Regel Kompromisse verlangen:

1. Technische Qualität der Spritzgußteile als Funktion der Gleichmäßigkeit der Temperaturverteilung im Werkzeug und der Höhe der Werkzeugtemperatur.

2. Wirtschaftliche Zykluszeiten durch schnelle Wärmeabfuhr aus der mit Formmasse gefüllten Kavität.

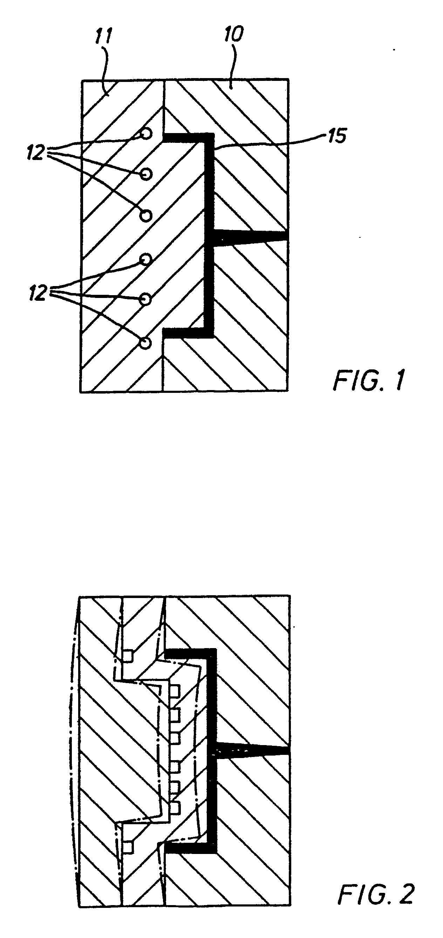

Welche Forderung bei der Anlage des Werkzeugtemperiersystems überwiegt, hängt vom Werkstoff und von den verlangten Fertigteileigenschaften ab. Werkzeugplatten, die zum Zweck des Einarbeitens von Temperierkanälen geteilt werden, wie aus Figur 2 ersichtlich, sind weniger biegesteif als einteilige Platten. Dadurch können unter Einwirkung des Spritzdruckes örtliche Formänderungen entstehen, so daß Maßtoleranzen nicht erreicht werden, das Entformen erschwert wird, oder Undichtigkeiten der Kühlkanäle entstehen. Die Durchmesser der Temperierkanäle bewegen sich im allgemeinen im Bereich von 8 bis 15 mm. Je kleiner der Abstand der Temperierkanäle zueinander ist, um so gleichmäßiger ist die Werkzeugtemperatur. Treten jedoch konstruktionsbedingt große Abstände der Temperierkanäle zueinander auf, so müssen der Abstand zur Kavität und der Kanaldurchmesser ebenfalls größer werden, um die gewünschte Gleichmäßigkeit der Temperaturverteilung zu erreichen. Außerdem muß mit zunehmender Wanddicke mehr Wärme abgeführt werden, folglich müssen die Kanaldurchmesser größer werden.

Müssen kompliziert aufgebaute Formteile gefertigt werden, so ist zusätzlich das Problem zu lösen, die Temperierkanäle in das Werkzeug durch Bohrungen mit dem gewünschten Querschnitt einzubringen und dabei die oben genannten Bedingungen zu berücksichtigen. Infolgedessen ist die Herstellung der Temperierkanäle in einem Spritzgießwerkzeug normalerweise umständlich und teuer zu bewerkstelligen.

Tritt beispielsweise beim Spritzgießen von Wikkelnaben für Video-Cassetten die oben erwähnte ungleichmäßige Temperaturverteilung des Spritzgießwerkzeuges auf, so erhalten die Wickelnaben einen Schlagfehler und laufen in der Cassette unrund.

In der DE-A-24 12 223 wird zur Vermeidung der Formänderungen der zu fertigenden Gegenstände vorgeschlagen, im Spritzgießwerkzeug Abschnitte unterschiedlicher thermischer Leitfähigkeit oder unterschiedlicher Temperatur, etwa durch isolierende Einlagen, vorzusehen. Dadurch wird aber das Werkzeug noch komplizierter aufgebaut.

Aus der DE-A-27 34 346 ist eine zweiteilige Spritzgießform zur Herstellung von plattenförmigen Informationsträgern bekannt, bei der jedes Teil aus zwei oder drei Platten zusammengesetzt ist, welche jeweils ein oder mehrere Heiz- oder Kühlsysteme in einem Kanalsystem enthalten und wobei die Platten durch Schrauben, Nieten oder Löten miteinander verbunden werden. Bei dieser Konstruktion ist zu befürchten, daß die bereits erwähnten Formänderungen durch hohen Einspritzdruck auftreten.

Daher bestand die Aufgabe, ein Verfahren zur Herstellung eines Spritzgießwerkzeuges mit einem Temperierkanalsystem zu finden, das die oben angegebenen Nachteile vermeidet.

Die Aufgabe wurde erfindungsgemäß gelöst mit einem Verfahren mit den im Anspruch 1 genannten Merkmalen.

Nähere Einzelheiten der Erfindung gehen aus den Unteransprüchen, der Beschreibung und den Zeichnungen hervor.

Im Folgenden wird die Erfindung anhand der Zeichnungen näher erläutert und zwar zeigen:

| Figur 1 und 2 | Querschnitte durch Werkzeugeinsätze gemäß dem Stand der Technik. |
| Figur 3 | einen Querschnitt durch eine nach dem erfindungsgemäßen Verfahren hergestellte Ausführungsform einer Spritzgießwerkzeugs-Einrichtung |
| Figur 4 | eine Ansicht der Trennebene des düsenseitigen Werkzeuge- |

Figur 5    die Temperaturverteilung an der Werkzeuginnenwand eines Spritzgießwerkzeuges nach dem Stand der Technik

Figur 6    die Temperaturverteilung der Werkzeuginnenwand in einem Werkzeug, das nach dem erfindungsgemäßen Verfahren hergestellt wurde

Figur 7    einen Vergleich von Schlagfehlern von VHS-Naben, gefertigt in Spritzgießwerkzeugen gemäß dem Stand der Technik beziehungsweise nach dem erfindungsgemäßen Verfahren.

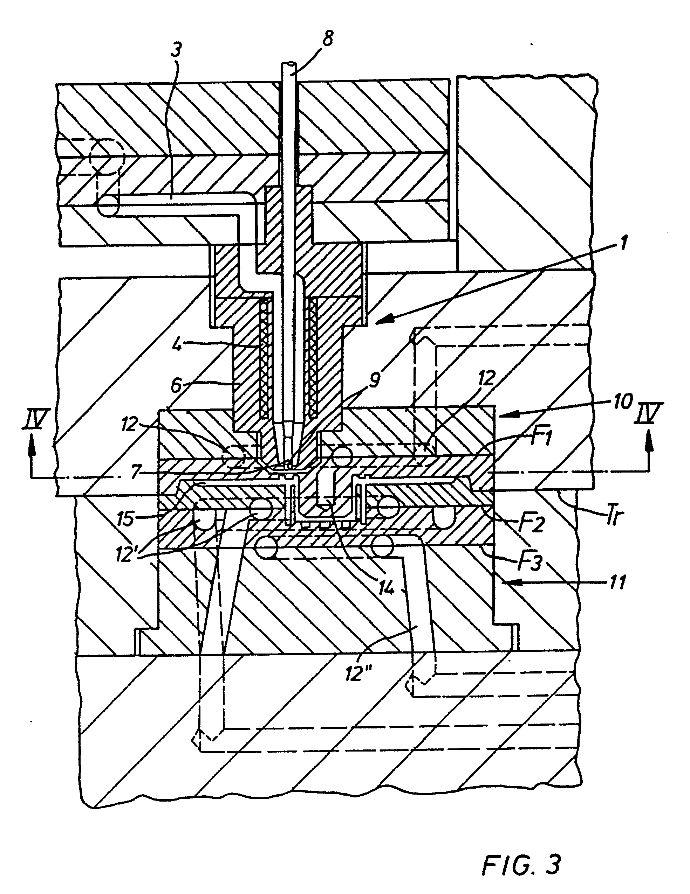

Figur 3 zeigt im Querschnitt schematisch eine Einrichtung zum Spritzgießen. Sie besteht aus einer Heißkanaldüse (1), bekannt beispielsweise aus den Veröffentlichungen DE-A-23 47 987, DE-A-31 27 938, DE-A-32 45 571, DE-A-32 49 486 und DE-A-33 24 901 sowie den Werkzeugeinsätzen (10, 11), welche je nach der zu spritzenden Form unterschiedlich aufgebaut sein können. Zur Heißkanaldüse führt ein Kanalverteiler (3), durch den der flüssige Kunststoff unter Druck einströmt. Ein Heizsystem (4), beispielsweise bestehend aus Heizwendeln, ist in der Heißkanaldüse vorhanden, die ein Stahlmantel (6) umkleidet. Am unteren Ende der Heißkanaldüse befindet sich ein Nadelventil (7), bekannt beispielsweise aus den schon genannten Veröffentlichungen DE-A-32 45 571 und DE-A-32 49 486, das durch einen Kolben (8) gesteuert wird und die Öffnung (9) taktweise öffnet und schließt. Der Werkzeugeinsatz besteht im allgemeinen aus Werkzeugstahl und setzt sich in der vorliegenden Ausführungsform aus zwei Teilen (10, 11) mit der Trennebene (Tr), die zum Entformen des Kunststoffteils auseinandergeklappt werden kann, zusammen. Der obere düsenseitige Werkzeugeinsatz (10) ist über Befestigungsschrauben mit dem übrigen Maschinenteil verbunden. In die Kavität (15) zwischen oberem und unterem Werkzeugeinsatz wird der Kunststoff eingespritzt. Beide Werkzeugeinsätze (10, 11) besitzen ein Temperierkanalsystem (12, 12', 12'') in verschiedenen Ebenen mit einem Zulauf- und Ablaufsystem durch das die Temperierflüssigkeit, welche Wasser oder ein Öl sein kann, gepumpt wird. Die verschiedenen Temperierebenen können unterschiedliche Durchflußmengen haben und können miteinander verbunden sein, der Querschnitt der Kanalwände kann rund sein, kann aber auch beliebig andere Querschnittsformen aufweisen.

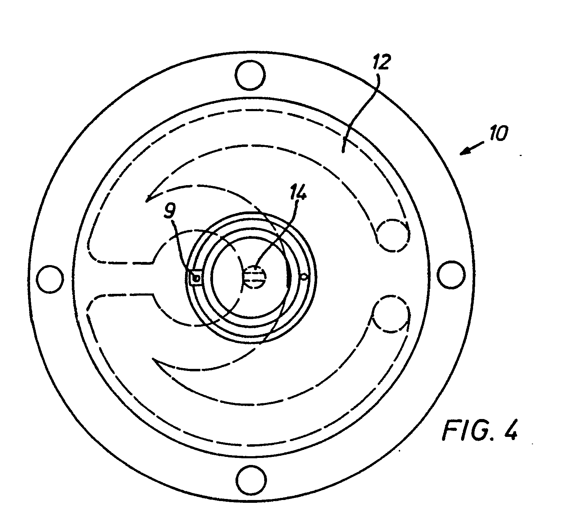

Figur 4 zeigt die Verbindung des Kanalsystems in dem oberen Werkzeugeinsatz (10), wobei der Stutzen (14) die Kühlung des mittleren Teiles der Kavität (15) besorgt.

Nach dem Stand der Technik wird, wie bereits geschildert, das Temperierkanalsystem durch verschiedene von der Außenfläche eingebrachte Bohrungen hergestellt. Anschließend müssen die Bohrungen nach außen durch Stopfen verschlossen werden. Demgegenüber besteht das Wesen der vorliegenden Erfindung darin, daß sowohl der obere wie der untere Werkzeugeinsatz (10, 11) aus zwei oder mehr Einzelplatten zusammengesetzt ist, in die von den Trennflächen (F1, F2, F3) aus die Temperierkanäle durch Fräsen und Bohren eingearbeitet werden. Auf diese Weise wird in jede Einzelplatte lediglich ein Teil des Kanalquerschnitts, beispielsweise die Hälfte, eingearbeitet. Es leuchtet ein, daß auf diese Weise erheblich einfacher die Anzahl, die Verteilung und die Querschnittsform der Temperierkanäle gestaltet werden kann, ohne daß Bohrungen nach außen entstehen. Nach geeigneter Vorbehandlung der Trennflächen, wie weiter unten geschildert, werden die einzelnen Platten durch Diffusionsschweißen zusammengefügt.

Das Diffusionsschweißen ist ein für verschiedene Zwecke angewendetes Verfahren, bei dem, wie aus dem Welding Handbook, 7. Edition, Volume III, Seiten 312 ff. bekannt, die Berührungsflächen ineinander diffundieren. Das heißt, es erfolgt ein Wachsen der Korngrenzen über die Trennflächen hinweg. Die Nahtstelle heilt durch Rekristallisation aus, so daß die 100%ige Festigkeit des Grundwerkstoffs, beispielsweise Werkzeugstahl, erhalten wird. Wie außerdem aus den Veröffentlichungen DE-B-16 52 878, DE-A-23 42 774, DE-A-33 40 235, DE-A-34 01 670, AT-B-245 895 sowie den EP-A-0 091 371 und EP-A-0 167 492 bekannt, können gleiche oder auch verschiedene Werkstoffe auf diese Weise miteinander verbunden werden, wie beispielsweise Stahl-Kupfer, Keramik-Niob oder andere. In den oben erwähnten Schriften wird auch die notwendige Vorbehandlung der zusammenzufügenden Flächen beschrieben.

Die Oberflächen der an den Fügeflächen F1, F2, F3 zusammenzufügenden Teile werden bevorzugt auf eine Rauhtiefe $R_z < 3$ μm abgeschliffen, anschließend werden die Platten mehreren Reinigungsprozessen beispielsweise bei Ultraschallbeaufschlagung unter Anwendung von Reinigungsmitteln wie Kaltron, Aceton und/oder Ethanol unterzogen. Anschließend werden die Teile zusammengepaßt und in eine Kammer gebracht, die auf einen Restdruck von < 40 Torr, vorzugsweise < als 0,01 Torr, evakuiert wird. Statt der Evakuierung kann auch, wie in der DE-A-23 42 774 beschrieben, eine Schutzgasatmosphäre angewandt werden. Gleichzeitig werden die zu verschweißenden Werkzeugteile bevorzugt durch induktive Erhitzung gleichmäßig auf eine Temperatur von 900 - 1 100 °C, insbesondere 1 050 °C, erhitzt. Dabei werden die Werkzeugteile hydraulisch unter einem Druck von 10 - 30 N/mm², vorzugsweise 15 N/mm², während einer Zeitdauer von 0,5 bis 4 Stunden, vorzugsweise 2 Stunden zusammengepreßt. Danach wird das Werkzeug langsam abgekühlt, und wenn es etwa 600 bis 800 °C, vorzugsweise 700 °C, erreicht hat, wird der Druck weggenommen und anschließend wird auf Raumtemperatur abgekühlt.

Die so zusammengeschweißten Werkzeughälften (10, 11) können anschließend beliebig bearbeitet werden, das heißt, die Verbindungen für die Temperierkanäle, die Schraubenbefestigung der Werkzeugeinsätze am Spritzgießwerkzeug, die Form und die Oberflächenbearbeitung der zusammenzupressenden Einsätze (10, 11) sowie der Kavität können jetzt geschaffen und besorgt werden.

Anschließend wird am Beispiel eines Spritzgießwerkzeuges zur Herstellung von Spulennaben für VHS-Video-Cassetten der Vorteil des nach dem erfindungsgemäßen Verfahren hergestellten Werkzeuges demonstriert. Die Spulennabe besteht aus Acrylnitril-Butadien-Styrol-Copolymer.

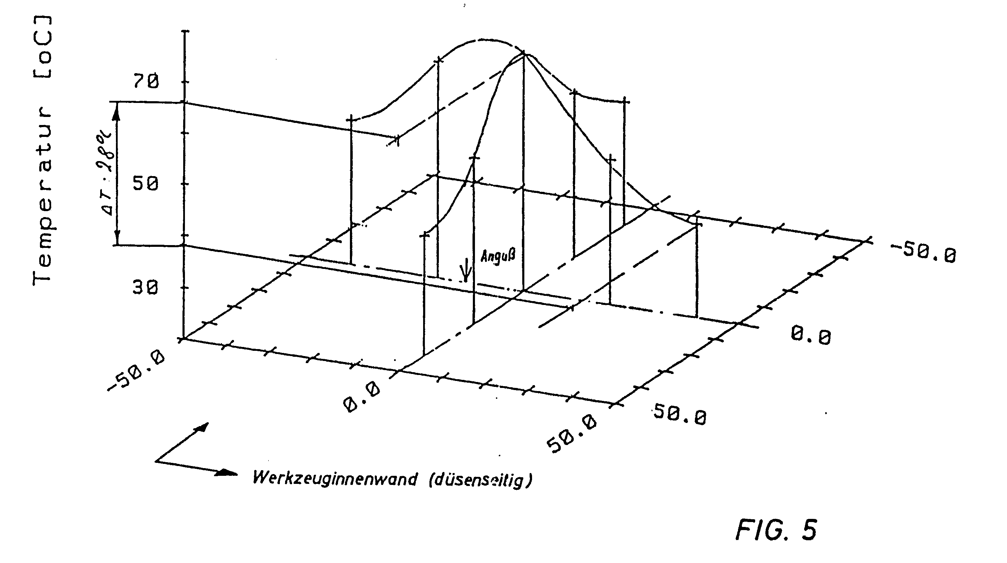

Figur 5 zeigt die Temperaturverteilung, gemessen an der Werkzeuginnenwand eines Spritzgießwerkzeuges, hergestellt gemäß dem Stand der Technik. Die maximale Temperaturdifferenz beträgt ca. 28 °C.

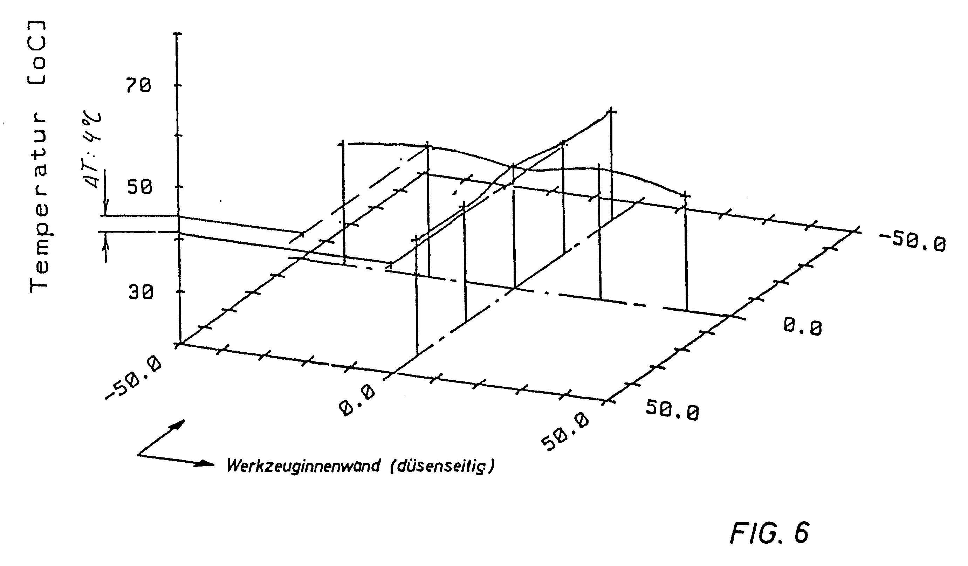

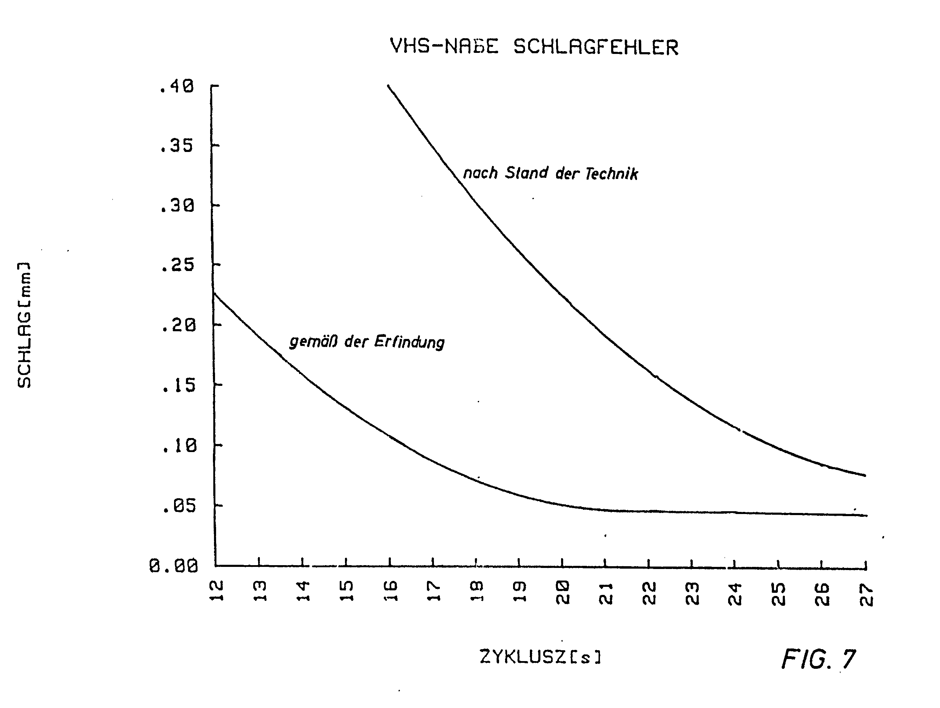

Figur 6 zeigt im gleichen Maßstab die Temperaturverteilung der Werkzeuginnenwand eines nach dem erfindungsgemäßen Verfahren hergestellten Spritzgießwerkzeuges. Hier ist die Temperaturverteilung wesentlich gleichmäßiger und der maximale Temperaturunterschied beträgt lediglich ca. 4 °C. Daraus resultiert, wie aus Figur 7 deutlich ersichtlich, eine wesentlich geringere Verformung der VHS-Spulennabe, gemessen als Schlagfehler in Abhängigkeit von der Zykluszeit des Spritzvorgangs, wenn die Spulennabe in einem Werkzeug, das nach dem erfindungsgemäßen Verfahren hergestellt wurde, gespritzt wird.

Die Vorteile des nach dem erfindungsgemäßen Verfahren hergestellten Spritzgießwerkzeugs lassen sich wie folgt zusammenfassen:

- Das Temperierkanalsystem kann bequem in das Spritzgießwerkzeug eingearbeitet werden, es können die für eine optimale Temperierung erforderlichen Kanalquerschnitte eingearbeitet werden
- nach dem Diffusionsschweißverfahren können die Werkzeugteile beliebig bearbeitet werden
- die Zykluszeit im Spritzgießverfahren kann wesentlich verkürzt werden.

Diese Vorteile, die bei der Herstellung von Massenprodukten wie Cassettenteile voll zum Tragen kommen, wiegen den Nachteil der Werkstoffvorbereitung für das Diffusionsschweißverfahren und die Kosten für eine Diffusionsschweißapparatur bei weitem auf.

## Patentansprüche

1. Verfahren zur Herstellung eines Spritzgießwerkzeuges, welches ganz oder teilweise aus Werkzeugstahl besteht und welches ein Temperierkanalsystem (12, 12' , 12") sowie eine Kavität (15) enthält, in die aus einer Düse (1) ein thermoplastischer Kunststoff eingespritzt wird, wobei die das Temperierkanalsystem enthaltenden Werkzeugeinsätze (10, 11) jeweils aus zwei oder mehr Platten zusammengesetzt sind, in deren zu verbindende Flächen die Kanäle (12, 12' , 12") vorzugsweise durch Fräsen und Bohren eingearbeitet werden, worauf die zu verbindenden Flächen (F1, F2, F3) abgeschliffen sowie von Verunreinigungen befreit werden und anschließend die Platten durch Diffusionsschweißen zusammengefügt werden.

2. Verfahren nach Anspruch 1, dadurch gekennzeichnet, daß in jede der Platten lediglich ein Teil der Kanalbohrungsquerschnitte eingearbeitet wird und erst im zusammengefügten Zustand der volle Kanalquerschnitt erhalten wird.

## Claims

1. Method of manufacturing an injection moulding tool which consists wholly or partly of tool-grade steel and comprises a tempering channel system (12, 12' , 12' ') and a cavity (15), into which a thermoplastic plastics material is injected from a nozzle (1), wherein the tool inserts (10, 11) comprising the tempering channel system are each composed of two or more plates, in whose faces to be joined the channels (12, 12', 12") are machined, preferably by milling and boring, whereupon the faces (F1, F2, F3) to be joined are ground and cleaned and then the plates are joined by diffusion welding.

2. Method according to claim 1, characterised in that only one part of the channel bore cross-section is machined in each plate, and the complete channel cross-section is only obtained when the plates are joined.

## Revendications

1. Procédé de fabrication d'un outil de moulage par injection qui est constitué, entièrement ou partiellement, d'acier à outil et qui contient un système de canaux de refroidissement (12, 12', 12") ainsi qu'une cavité (15) dans laquelle on injecte un matériau thermoplastique à partir d'une buse (1). procédé dans lequel les garnitures (10, 11), insérées dans l'outil et contenant le système de cannux de refroidissement, sont chacune composées de deux ou plus plaques dans les surfaces à réunir desquelles on usine les canaux (12, 12, 12"), de préférence par fraisage et perçage, après quoi on rectifiee les surfaces (F1, F2,F3) à réunir et on en enlève les impuretés puis on assemble les plaques par soudage par diffusion.

2. Procédé selon la revendication 1, caractérisé par le fait que dans chacune des plaques on n'usine qu'une partie des sections de perçage des canaux et que l'on n'obtient la section complète des canaux qu'à l'état assemblé.

11  10

12

15

12

*FIG. 1*

*FIG. 2*

FIG. 3

FIG. 4

FIG. 5

EP 0 261 523 B1

FIG. 6

EP 0 261 523 B1

VHS-NABE SCHLAGFEHLER

nach Stand der Technik

gemäß der Erfindung

SCHLAG[mm]

ZYKLUSZ[s]

FIG.7